(19) Europäisches Patentamt
European Patent Office
Office européen des brevets

(11) EP 3 527 635 A1

(12) EUROPÄISCHE PATENTANMELDUNG

(43) Veröffentlichungstag:
21.08.2019 Patentblatt 2019/34

(51) Int Cl.:
C09D 167/00 (2006.01)    C08L 67/08 (2006.01)
C08L 75/16 (2006.01)

(21) Anmeldenummer: 18156701.7

(22) Anmeldetag: 14.02.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD TN

(71) Anmelder: Zeller + Gmelin GmbH & Co. KG
73054 Eislingen/Fils (DE)

(72) Erfinder:
• HÖFLER, Ulrich
73728 Esslingen am Neckar (DE)
• RAKOCI, Michael
73240 Wendlingen am Neckar (DE)

(74) Vertreter: Zumstein, Angela
Maiwald Patentanwalts- und
Rechtsanwaltsgesellschaft mbH
Elisenhof
Elisenstraße 3
80335 München (DE)

(54) BESCHICHTUNGSZUSAMMENSETZUNG MIT VERBESSERTER HAFTUNG

(57) Die vorliegende Anmeldung betrifft eine Beschichtungszusammensetzung (B), aufweisend eine dynamische Viskosität bei einer Schergeschwindigkeit (D) von 25 $s^{-1}$ von 60 bis 150 Pa·s, enthaltend

a) ein oder mehrere UV-härtbare Bindemittel (UV-BM),
b) ein oder mehrere Alkydharze (A),
wobei
i) die Gesamtmenge an UV-härtbaren Bindemitteln (UV-BM) und Alkydharzen (A) mindestens 30 Gew.-% basierend auf der Beschichtungszusammensetzung (B) beträgt, und
ii) die Beschichtungszusammensetzung (B) weniger als 15 Gew.% an flüchtigen Bestandteilen enthält;

und ein Verfahren zur Beschichtung von nicht-grundierten Metallsubstraten (S), enthaltend die folgenden Schritte

a) Aufbringen der Beschichtungszusammensetzung (B) gemäß der Erfindung direkt auf das nicht-grundierte Metallsubstrat (S),
b) partielles oder vollständiges UV-Härten der in Schritt a) aufgebrachten Beschichtungszusammensetzung (B); ein beschichtetes nicht-grundiertes Metallsubstrat (S) erhältlich gemäß dem Verfahren und die Verwendung der Beschichtungszusammensetzung (B) gemäß der Erfindung zur Beschichtung von nicht-grundierten Metallsubstraten (S).

EP 3 527 635 A1

## Beschreibung

Die vorliegende Erfindung betrifft eine Beschichtungszusammensetzung, insbesondere geeignet für Metalldruck, ein Verfahren zur Beschichtung von nicht-grundierten Metallsubstraten mittels dieser Beschichtungszusammensetzung, ein nicht-grundiertes Substrat beschichtet mit der Beschichtungszusammensetzung und die Verwendung der Beschichtungszusammensetzung zur Beschichtung von nicht-grundierten Metallsubstraten.

Konventionell härtende und strahlungshärtende Farben sind im Metalldruck, insbesondere im Bereich Metaldeco, grundsätzlich bekannt. Um die Haftung auf der Metalloberfläche zu gewährleisten werden üblicherweise eine oder mehrere Grundierungen, auch "primer" genannt, aufgetragen.

Hierzu sind jedoch mehrere zusätzliche Verfahrensschritte erforderlich, da die Grundierung nicht nur aufgetragen werden, sondern, normalerweise vollständig ausgehärtet werden muss, bevor weitere Beschichtungen aufgetragen werden können. Zudem sind diese Primer üblicherweise Einbrennsysteme, zu deren Aushärtung eine hohe Energiemenge erforderlich ist.

Beschichtungszusammensetzungen, die ohne eine derartige Grundierung auskommen, sind daher wünschenswert. Jedoch muss die Haftung weiterhin gewährleistet sein.

Es wurde überaschenderweise gefunden, dass dies mit einer Kombination an UV-härtbarem Bindemittel und einem Alkydharz erreicht werden kann.

Die vorliegende Erfindung stellt daher eine Beschichtungszusammensetzung (B), aufweisend eine dynamische Viskosität bei einer Schergeschwindigkeit (D) von 25 s$^{-1}$ von 60 bis 150 Pa·s, zur Verfügung, enthaltend

    a) ein oder mehrere UV-härtbare Bindemittel (UV-BM),
    b) ein oder mehrere Alkydharze (A),

wobei

    i) die Gesamtmenge an UV-härtbaren Bindemitteln (UV-BM) und Alkydharzen (A) mindestens 30 Gew.-% basierend auf der Beschichtungszusammensetzung (B) beträgt, und
    ii) die Beschichtungszusammensetzung (B) weniger als 15 Gew.% an flüchtigen Bestandteilen enthält.

Die Beschichtungszusammensetzung der vorliegenden Erfindung zeigt überraschenderweise eine sehr gute Haftung auf Metallsubstraten auch ohne eine Grundierungsschicht (="primer"). Die zur Auftragung der primer-Schicht notwendigen, zusätzlichen Verfahrensschritte entfallen somit und die zur Aushärtung dieser primer-Schicht notwendige Energie. Zudem ist die Beschichtungszusammensetzung in üblichen Druckmaschinen anwendbar und aushärtbar, es ist also keine Modifikation oder Neuanschaffung von existierendem Equipment notwendig. Zudem ist die UV-Härtung in der Regel ausreichend, und ein separates Erwärmen der beschichteten Substrate zur Härtung des Alkydharzes ist nicht erforderlich.

"Nicht-grundiertes Metallsubstrat (S)" gemäß der vorliegenden Erfindung bedeutet ein Metallsubstrat, welches keine Grundierung, auch "primer" genannt, aufweist.

Aufgrund der dynamischen Viskosität bei einer Schergeschwindigkeit (D) von 25 s$^{-1}$ von 60 bis 150 Pa·s ist die Beschichtungszusammensetzung (B) der vorliegenden Erfindung insbesondere geeignet für Metalldruckverfahren, speziell für Nassoffsetverfahren und direkten und indirekten Hochdruck.

## UV-härtbares Bindemittel (UV-BM)

UV-härtbare Bindemittel (UV-BM) weisen üblicherweise mindestens eine radikalisch polymerisierbare C-C-Doppelbindung pro Molekül auf

UV-härtbare Bindemittel (UV-BM) sind üblicherweise Präpolymere, aufweisend mindestens eine radikalisch polymerisierbare C-C-Doppelbindung pro Molekül, vorzugsweise 2 bis 20, stärker bevorzugt 2 bis 10 radikalisch polymerisierbare C-C-Doppelbindungen pro Molekül.

Die radikalisch polymerisierbaren C-C-Doppelbindung(en) können in Form von (Meth)acryloyl-, Vinyl-, Maleat- und/oder Fumarat-gruppen vorliegen, vorzugsweise liegen sie in Form von (Meth)acryloyl-Gruppen vor. In einer Ausführungsform liegen keine radikalisch polymerisierbaren C-C-Doppelbindung(en) in Form von Vinyl-, Maleat- und/oder Fumarat-gruppen vor.

Geeignete Präpolymere sind beispielsweise mit radikalisch polymerisierbaren C-C-Doppelbindung(en) funktionalisierte Poly-(Meth)acrylate, Polyurethane, Polyester, ungesättigte Polyester, halogenierte Polyester, z.B. chlorierte Polyester, Polyether, Silikone, Epoxide, Polyamine, Melamine oder Mischungen hiervon, beispielsweise mit (Meth)-acryloyl-, Vinyl-, Maleat- und/oder Fumarat-gruppen, v.a. mit (Meth)-acryloyl-, funktionalisierte Poly-(Meth)acrylate, Polyurethane, Polyester, ungesättigte Polyester, halogenierte Polyester, z.B. chlorierte Polyester, Polyether, Silikone, Epoxide, Polyamine, Melamine oder Mischungen hiervon,

insbesondere Polyurethane, Polyester, halogenierte Polyester, z.B. chlorierte Polyester, oder Mischungen hiervon, beispielsweise mit (Meth)-acryloyl-, Vinyl-, Maleat- und/oder Fumarat-gruppen, v.a. mit (Meth)-acryloyl-, funktionalisierte Polyurethane, Polyester, halogenierte Polyester, z.B. chlorierte Polyester, oder Mischungen hiervon, insbesondere Polyurethane, Polyester, halogenierte Polyester, z.B. chlorierte Polyester, oder Mischungen hiervon, beispielsweise mit (Meth)-acryloyl-, Vinyl-, Maleat- und/oder Fumarat-gruppen, v.a. mit (Meth)-acryloyl-, funktionalisierte Polyurethane, Polyester, halogenierte Polyester, z.B. chlorierte Polyester, oder Mischungen hiervon.

Die Vorsilbe "Poly-" schließt entsprechende Oligomere ein. Beispielsweise schließt der Begriff "Polyurethan" auch oligomere Urethane ein.

Vorzugsweise weist zumindest eines der UV-härtbaren Bindemittel (UV-BM) eine dynamische Viskosität bei einer Schergeschwindigkeit (D) von $25 \, s^{-1}$ von 15 bis 200 Pa·s auf, stärker bevorzugt sind 20 bis 125 Pa·s, noch stärker bevorzugt weisen alle der UV-härtbaren Bindemittel (UV-BM), sofern mehr als eines vorhanden ist, eine dynamische Viskosität bei einer Schergeschwindigkeit (D) von $25 \, s^{-1}$ von 15 bis 200 Pa·s auf, stärker bevorzugt sind 20 bis 125 Pa·s.

Vorzugsweise weist zumindest eines der UV-härtbaren Bindemittel (UV-BM) eine Säurezahl von nicht mehr als 35 mg KOH/g auf, insbesondere bevorzugt von nicht mehr als 30 mg KOH/g, noch stärker bevorzugt weisen alle der UV-härtbaren Bindemittel (UV-BM), sofern mehr als eines vorhanden ist, eine Säurezahl von nicht mehr als 35 mg KOH/g auf, insbesondere bevorzugt von nicht mehr als 30 mg KOH/g.

Es können auch Mischungen von zwei oder mehreren UV-härtbaren Bindemitteln (UV-BM) gemäß der vorliegenden Erfindung verwendet werden. Üblicherweise werden nicht mehr als fünf verschiedene UV-härtbare Bindemittel (UV-BM) gemäß der vorliegenden Erfindung verwendet, vorzugsweise nicht mehr als drei. In einer besonders bevorzugten Ausführungsform werden zwei UV-härtbare Bindemittel (UV-BM) gemäß der vorliegenden Erfindung verwendet.

In einer besonders bevorzugten Ausführungsform enthält die Beschichtungszusammensetzung (B) als UV-härtbare Bindemittel (UV-BM):

(a1) einen mit radikalisch polymerisierbaren C-C-Doppelbindung(en) funktionalisierten Polyester, vorzugsweise chlorierten Polyester; und
(a2) ein mit radikalisch polymerisierbaren C-C-Doppelbindung(en) funktionalisiertes Polyurethan.

Im Folgenden werden bevorzugte Merkmale dieser bevorzugten Ausführungsform beschrieben.

Der mit radikalisch polymerisierbaren C-C-Doppelbindung(en) funktionalisierte Polyester (a1), vorzugsweise chlorierte Polyester und/oder das mit radikalisch polymerisierbaren C-C-Doppelbindung(en) funktionalisierte Polyurethan (a2) ist/sind vorzugsweise mit (Meth)acryloyl-gruppen funktionalisiert, stärker bevorzugt sind der mit radikalisch polymerisierbaren C-C-Doppelbindung(en) funktionalisierte Polyester (a1), vorzugsweise chlorierten Polyester und das mit radikalisch polymerisierbaren C-C-Doppelbindung(en) funktionalisierte Polyurethan (a2) mit (Meth)acryloyl-gruppen funktionalisiert.

Das Gewichtsverhältnis (a1):(a2) beträgt vorzugsweise 2,0:1,0 bis 15:1,0, stärker bevorzugt sind 3,5:1,0 bis 12:1,0 und am stärksten bevorzugt ist 5,0:1,0 bis 10:1,0.

Mit radikalisch polymerisierbaren C-C-Doppelbindung(en) funktionalisierte Polyester, vorzugsweise chlorierte Polyester (a1) sind im Stand der Technik bekannt. Chlorierte Polyester werden üblicherweise durch Veresterung einer chlorhaltigen Disäure oder eines chlorhaltigen Disäureanhydrids mit einem Di- oder Polyol erhalten.

Der mit radikalisch polymerisierbaren C-C-Doppelbindung(en) funktionalisierte Polyester, vorzugsweise chlorierte Polyester (a1), weist vorzugsweise eine dynamische Viskosität bei einer Schergeschwindigkeit (D) von $25 \, s^{-1}$ von 50 bis 150 Pa·s auf, stärker bevorzugt sind 75 bis 125 Pa·s.

Das mit radikalisch polymerisierbaren C-C-Doppelbindung(en) funktionalisierte Polyurethan (a2) weist vorzugsweise 3 bis 10 radikalisch polymerisierbare C-C-Doppelbindungen pro Molekül auf, stärker bevorzugt sind 4 bis 8 radikalisch polymerisierbare C-C-Doppelbindungen noch stärker bevorzugt sind 5 bis 7 radikalisch polymerisierbare C-C-Doppelbindungen.

Polyurethane sind aus dem Stand der Technik bekannt. Zur Funktionalisierung mit radikalisch polymerisierbaren C-C-Doppelbindung(en) kann ein OH-terminiertes Polyurethan zu einem Ester reagiert werden, beispielsweise durch Umsetzung mit entsprechenden (Meth)-acryloyl-, Vinyl-, Maleat- und/oder Fumarat-gruppen, v.a. mit (Meth)-acryloyl-Verbindungen. Alternativ und bevorzugt kann ein Isocyanat-terminiertes Polyurethan mit einem mit ein oder mehrere radikalisch polymerisierbaren C-C-Doppelbindung(en) funktionalisierten Alkohol umgesetzt werden. Beispiele hierfür sind die (Meth)acrylate von mehrwertigen Alkoholen, wie beispielsweise Trimethylolpropan und Pentaerythrit.

Das mit radikalisch polymerisierbaren C-C-Doppelbindung(en) funktionalisierte Polyurethan (a2) weist vorzugsweise eine dynamische Viskosität bei einer Schergeschwindigkeit (D) von $25 \, s^{-1}$ von 15 bis 100 Pa·s auf, stärker bevorzugt sind 15 bis 50 Pa·s.

In einer besonders bevorzugten Ausführungsform enthält die Beschichtungszusammensetzung (B) gemäß der vorliegenden Erfindung keine weiteren UV-härtbaren Bindemittel (UV-BM) neben

(a1) dem mit radikalisch polymerisierbaren C-C-Doppelbindung(en) funktionalisierten Polyester, vorzugsweise chlorierten Polyester und

(a2) dem mit radikalisch polymerisierbaren C-C-Doppelbindung(en) funktionalisierten Polyurethan.

Im Folgenden werden weitere bevorzugte Merkmale der Beschichtungszusammensetzung (B) der vorliegenden Erfindung inklusive aller ihrer bevorzugten Ausführungsformen beschrieben, es sei denn, es wird explizit auf etwas Anderes hingewiesen.

**Reaktivverdünner (RV)**

Die Beschichtungszusammensetzung (B) enthält vorzugsweise einen oder mehrere Reaktivverdünner (RV). Die Mengenangaben beziehen sich bei Vorliegen von mehreren Reaktivverdünnern auf deren Gesamtmenge. Reaktivverdünner sind im Stand der Technik bekannt. Üblicherweise enthält der Reaktivverdünner mindestens eine C-C-Doppelbindung, vorzugsweise 1 bis 3 C-C-Doppelbindungen und besonders bevorzugt 2 bis 3 C-C-Doppelbindungen.

Geeignete Reaktivverdünner (RV) sind beispielsweise Ester der (Meth)acrylsäure mit ein oder mehrwertigen Alkoholen, die 1 bis 20 C-Atome aufweisen, beispielsweise Ester der (Meth)acrylsäure von Propanol, Glykol, Diethylenglykol, Propylenglykol, Dipropylenglykol, 1,4-Butanediol, 1,6-Hexandiol, Trimethylolpropan, Pentaerythrit, vorzugsweise Glykol, Diethylenglykol, Propylenglykol, Dipropylenglykol, 1,4-Butanediol, 1,6-Hexandiol, Trimethylolpropan, Pentaerythrit;

vinylaromatische Verbindungen, z.B. Divinylbenzol, $\alpha,\beta$-ungesättigte Nitrile, z.B. Acrylnitril, Methacrylnitril, alpha,beta-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid;

konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, sowie Gemische davon.

Insbesondere bevorzugt sind Ester der (Meth)acrylsäure mit ein oder mehrwertigen Alkoholen, die 1 bis 20 C-Atome aufweisen, beispielsweise Ester der (Meth)acrylsäure von Propanol, Glykol, Diethylenglykol, Propylenglykol, Dipropylenglykol, 1,4-Butanediol, 1,6-Hexandiol, Trimethylolpropan, Pentaerythrit, vorzugsweise Glykol, Diethylenglykol, Propylenglykol, Dipropylenglykol, 1,4-Butanediol, 1,6-Hexandiol, Trimethylolpropan, Pentaerythrit, stärker bevorzugt sind Dipropylenglykoldiacrylat und Trimethylolpropantriacrylat.

Die Beschichtungszusammensetzung (B) enthält vorzugsweise 10 bis 30 Gew.% eines oder mehrerer Reaktivverdünner (RV), stärker bevorzugt sind 14 bis 26 Gew.% basierend auf der Beschichtungszusammensetzung (B).

Photoinitiator

Als Photoinitiatoren (PI) können dem Fachmann bekannte Photoinitiatoren verwendet werden, z.B. solche in "Advances in Polymer Science", Volume 14, Springer Berlin 1974. Darunter werden solche Photoinitiatoren verstanden, die unter Lichteinwirkung Radikale freisetzen und eine radikalische Reaktion, beispielsweise eine radikalische Polymerisation, starten können.

Beispiele sind Mono- oder Bisacylphosphinoxide, wie beispielsweise 2,4,6-Trimethylbenzoyldiphenylphosphinoxid, Ethyl 2,4,6-trimethylbenzoylphenylphosphinat, Bis(2,4,6-trimethylbenzoyl)phenylphosphinoxid, 2,4,6-Trimethylbenzoyl-diphenylphosphinoxid, (2,4,6-Trimethylbenzoyl)-2,4-dipentoxyphenylphosphinoxid, Bis(2,6-dimethoxybenzoyl)-2,4,4-Trimethylpentylphosphinoxid, Benzophenone, Hydroxyacetophenone, Phenylglyoxylsäure und ihre Derivative, z.B. Benzophenon, Acetophenon, Acetonaphthoquinon, Valerophenon, Hexanophenon, alpha-Phenylbutyrophenon, p-Morpholinopropiophenon, Dibenzosuberone, 4-Morpholinobenzophenon, 4-Morpholinodeoxybenzoin, p-Diacetylbenzol, 4-Aminobenzophenon, 4'-Methoxyacetophenon, beta-Methylanthrachinon, *Tert*butylanthrachinon, Anthrachinoncarbonsäureester, Benzaldehyde, alpha-Tetralon, 9-Acetylphenanthren, 2-Acetylphenanthrene, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthone, 2,4-Diethylthioxanthone, 2,4-Diisopropylthioxanthon, 2,4-Dichlorothioxanthon, Benzoin, Benzoinisobutylether, Chloroxanthenone, Benzoin Tetrahydropyranylether, Benzoinmethylether, Benzoinethylether, Benzoinbutylether, Benzoinisopropylether, 7H-Benzoinmethylether, Benz[de]anthracen-7-on, 1-naphthaldehyd, 4,4'-Bis(dimethylamino)benzophenon, 4-phenylbenzophenon, 4-Chlorobenzophenone, Michler's ketone, 1-Acetonaphthon, 2-Acetonaphthon, 1-Benzoylcyclohexan-1-ol, 2-Hydroxy-2,2-Dimethylacetophenon, 2,2-Dimethoxy-2-phenylacetophenon, 2,2-Diethoxy-2-phenylacetophenon, 1,1-Dichloroacetophenon, 1-Hydroxyacetophenon, Acetophenon Dimethylketal, o-Methoxybenzophenon, Triphenylphosphine, tri-o-tolylphosphine, Benz[a]anthracen-7,12-dion, 2,2-Diethoxyacetophenon, Benzilketale, beispielsweise Benzildimethylketal, 2-methyl-1-[4-(methylthio)phenyl]-2-morpholinopropan-1-on, Anthraquinone, z.B. 2-Methylanthrachinon, 2-Ethylanthrachinone, 2-*tert*-butyl-Anthrachinon, 1-Chloroanthrachinon, und 2-Amylanthrachinone, und 2,3-Butanedion, Alpha-hydroxy-ketone wie beispielsweise 1-Hydroxy-cyclohexyl-phenyl-keton, 2-Methyl-1[4-(methylthio)phenyl]-2-morpholinopropan-1-on, 2-Benzyl-2-dimethylamino-1-(4-morpholinophenyl)-butan-1-on, 2-Dimethylamino-2-(4-methyl-benzyl)-1-(4-morpholin-4-yl-phenyl)-butan-1-on, (3,4-Dimethoxy-benzoyl)-1-benzyl-1-dimethylaminopropan, 1-[4-(2-hydroxyethoxy)-phenyl]-2-hydroxy-2-methyl-1-propan-1-on, 2,2-Dimethoxy-1,2-diphenylethan-1-on, 2-Hydroxy-2-methyl-1-phenyl-propan-1-on, 2-hydroxy-1-{4-[4-(2-hydroxy-2-methyl-propionyl)-benzyl]-phenyl}-2-methyl-propan-1-one, 2-hydroxy-1-{4-[4-(2-hydroxy-2-methyl-propionyl)-phenoxy]-phenyl}-2-methyl-propan-1-on, 2-Hydroxy-1-{1-[4-(2-hydroxy-2-methyl-propionyl)-phenyl]-1,3,3-trimethyl-indan-5-yl}-2-methyl-propan-1-on, Aminoalkylphenone.

In der vorliegenden Erfindung werden Aminsynergisten auch zu den Photoinitiatoren gezählt. Die Beschichtungszusammensetzung (B) der vorliegenden Erfindung kann einen oder mehrere Aminsynergisten enthalten, wobei, falls vorhanden, üblicherweise ein Aminsynergist vorhanden ist. Beispiele für geeignete Aminsynergisten sind Ethyl-4-(dimethylamino)benzoat, Isoamyl 4-(Dimethylamino)benzoate, 2-Ethyl Hexyl-4-(dimethylamino)Benzoate und N,N-Diethylaminoethyl-Methacrylat, Dimethylaminoethyl-Methacrylate.

Die Beschichtungszusammensetzung (B) enthält vorzugsweise 2.0 bis 15 Gew.% an einem oder mehrere Photoinitiatoren (PI), stärker bevorzugt sind 4,0 bis 12,5 Gew.% basierend auf der Beschichtungszusammensetzung (B).

Insbesondere bevorzugt sind Kombinationen aus bis zu fünf Photoinitiatoren, stärker bevorzugt bis zu drei Photoinitiatoren.

Diese Kombination aus bis zu fünf bzw. bis zu drei Photoinitiatoren kann mindestens einen Aminsynergist enthalten, insbesondere bevorzugt ist eine Kombination aus drei Photoinitiatoren, optional enthaltend einen Aminsynergist, noch stärker bevorzugt eine Kombination aus einem Alphahydroxyketon, z.B. einem Alphahydroxyketon ausgewählt aus der zuvor genannten Liste, einem Thioxanthonderivat, z.B. einem Thioxanthonderivat aus der zuvor genannten Liste, und einem weiteren Photoinitiator, beispielsweise einen Aminsynergist, z.B. einem Aminsynergist ausgewählt aus der zuvor genannten Liste.

**Alkydharz (A)**

Alkydharze weisen üblicherweise keine terminalen C-C-Doppelbindungen auf.

Alkydharze sind im Stand der Technik bekannt. Sie enthalten üblicherweise eine oder mehrere ungesättigte Fettsäuren, beispielsweise Undecylensäure, Palmitoleinsäure, Petroselinsäure, Ölsäure, Eladinsäure, Vaccensäure, Gadoleinsäure, Isocensäure, Cetoleinsäure, Erucasäure, Linolsäure, alpha-Linolensäure, gamma-Linoleinsäure, und/oder Calendulasäure, insbesondere Ölsäure, alpha-Linolensäure und/oder Linolsäure.

Diese ungesättigten Fettsäuren werden üblicherweise mit freien OH-Gruppen eines Polyols zu entsprechenden Estern umgesetzt.

Die Polyole können polymere Polyole sein, beispielsweise Polyesterpolyole, Polyetherpolyole oder Polyurethanpolyole, vorzugsweise Polyesterpolyole.

Jedes der Alkydharze (A), weist vorzugsweise eine dynamische Viskosität bei einer Schergeschwindigkeit (D) von 25 s$^{-1}$ von 1 bis 200 Pa·s auf, stärker bevorzugt sind 5 bis 100 Pa·s, noch stärker bevorzugt sind 30 bis 50 Pa·s.

Die Öllänge des einen oder der mehreren Alkydharze (A), beträgt jeweils vorzugsweise mindestens 30%, stärker bevorzugt mindestens 40%, noch stärker bevorzugt mindestens 50%.

**Beschichtungszusammensetzung (B)**

Die Beschichtungszusammensetzung (B), aufweisend eine dynamische Viskosität bei einer Schergeschwindigkeit (D) von 25 s$^{-1}$ von 60 bis 150 Pa·s, enthält, wie oben ausgeführt,

    a) ein oder mehrere UV-härtbare Bindemittel (UV-BM),
    b) ein oder mehrere Alkydharze (A),

wobei

    i) die Gesamtmenge an UV-härtbaren Bindemitteln (UV-BM) und Alkydharzen (A) mindestens 30 Gew.-% basierend auf der Beschichtungszusammensetzung (B) beträgt, und
    ii) die Beschichtungszusammensetzung (B) weniger als 15 Gew.% an flüchtigen Bestandteilen enthält.

Der Gesamtgehalt an flüchtigen Bestandteilen der Beschichtungszusammensetzung (B) beträgt vorzugsweise nicht mehr als 5,0 Gew.% basierend auf der Gesamtmenge der Beschichtungszusammensetzung (B), stärker bevorzugt nicht mehr als 2,5 Gew.%, noch stärker bevorzugt nicht mehr als 1,0 Gew.%.

Die dynamische Viskosität bei einer Schergeschwindigkeit (D) von 25 s$^{-1}$ der Beschichtungszusammensetzung (B) beträgt vorzugsweise von 70 bis 140 Pa·s, stärker bevorzugt 80 bis 130 Pa·s.

Die dynamische Viskosität bei einer Schergeschwindigkeit (D) von 100 s$^{-1}$ der Beschichtungszusammensetzung (B) beträgt vorzugsweise von 40 bis 120 Pa·s, stärker bevorzugt 50 bis 110 Pa·s, noch stärker bevorzugt 60 bis 100 Pa·s.

Das Gewichtsverhältnis der Gesamtmenge an UV-härtbaren Bindemitteln (UV-BM) zu der Gesamtmenge an Alkydharzen (A), (UV-BM:A), beträgt vorzugsweise 2,0:1,0 bis 10,0:1,0, stärker bevorzugt sind 2,0:1,0 bis 5,0:1,0, noch stärker bevorzugt sind 3,0:1,0 bis 4,0:1,0

Der Tackwert (zu Deutsch Zügigkeit) bezeichnet in der Rheologie der Druckfarben den inneren Zug (Kohäsion) mit der sich eine Farbschicht ihrer Spaltung entgegensetzt. Die Zügigkeit ist gleich nach der Viskosität und noch vor der Elastizität die zweite für Druckvorgänge wesentliche rheologische Größe einer Druckfarbe. Im Gegensatz zur Klebrigkeit, bei der auch die Benetzung der Grenzflächenschicht (Adhäsion) eine Rolle spielt, bezeichnet die Zügigkeit nur eine innere Eigenschaft der Druckfarbe selbst und ist damit unabhängig von der Oberfläche, auf der die Farbe aufgetragen wird.

Da der physikalisch genaue Messwert in der SI-Einheit "Druck" in der praktischen drucktechnischen Anwendung nicht nötig ist, haben sich Verfahren etabliert, die speziell auf die Bedürfnisse der Druckindustrie optimiert wurden und die Zügigkeit in herstellerabhängigen Skalen angeben. In der vorliegenden Erfindung wird das Gerät "Inkomat" der Fa. Prüfbau verwendet. Dieses Gerät gibt den Tack-Wert in der gerätespezifischen Einheit "Inko" an.

Vorzugsweise beträgt der Tack-Wert der Beschichtungszusammensetzung (B) 10 bis 21 Inko, stärker bevorzugt sind 12 bis 19 Inko.

Die Beschichtungszusammensetzung (B) enthält optional bis zu 30 Gew.% an Pigmenten. Im Falle von transparenten Beschichtungszusammensetzungen (B) ist die Beschichtungszusammensetzung üblicherweise frei von Pigmenten. Falls die Beschichtungszusammensetzung (B) Pigmente enthält so enthält sie vorzugsweise 5,0 Gew.% bis 30 Gew.% Pigmente, noch stärker bevorzugt 10 Gew.% bis 25 Gew.% Pigmente basierend auf der Beschichtungszusammensetzung (B).

Geeignete Pigmente, beispielsweise für bestimmte Farbtöne wie Weiß, Schwarz, Gelb, Magenta und Cyan, sind im Stand der Technik bekannt.

Die Beschichtungszusammensetzung (B) kann ferner übliche Additive wie beispielsweise Hautverhinderer, Haftvermittler, Verdicker, Füllstoffe, Wachse, Stabilisatoren, beispielsweise UV-Stabilisatoren, etc. enthalten. Die Gesamtmenge an üblichen Additiven, falls vorhanden beträgt normalerweise nicht mehr als 25 Gew.%, bevorzugt 2,0 Gew.% bis 25 Gew.%. Üblicherweise beträgt der Anteil an Haftvermittlern, wenn vorhanden, mindestens 5,0 Gew.%, stärker bevorzugt sind mindestens 8,0 Gew.%.

Geeignete Haftvermittler sind beispielsweise Silane, Celloluseacetatopropionat, CelluloseAcetat-Butyrat (CAB), Chlorierte Polyolefine, Titanate oder Mischungen hiervon.

Die Beschichtungszusammensetzung (B) gemäß der vorliegenden Erfindung enthält vorzugsweise

a) 20 bis 50 Gew.% an einem oder mehrerer UV-härtbaren Bindemittel (UV-BM), vorzugsweise 25 bis 45 Gew.%
b) 2.0 bis 15 Gew.% an einem oder mehrerer Alkydharzen (A), vorzugsweise 5,0 bis 12 Gew.%
c) 10 bis 30 Gew.% an einem oder mehrerer Reaktivverdünner (RV), vorzugsweise 14 bis 26 Gew.%;
d) 2.0 bis 15 Gew.% an einem oder mehrere Photoinitiatoren (PI), vorzugsweise 4,0 bis 12,5 Gew.%;
e) optional bis zu 30 Gew.% an Pigmenten, beispielsweise 5,0 Gew.% bis 30 Gew.% Pigmente oder10 Gew.% bis 25 Gew.%

jeweils basierend auf der Beschichtungszusammensetzung (B),
wobei

die Gesamtmenge an UV-härtbaren Bindemitteln (UV-BM) und Alkydharzen (A) mindestens 30 Gew.-% basierend auf der Beschichtungszusammensetzung (B) beträgt;
und
die Gesamtmenge an UV-härtbaren Bindemitteln (UV-BM), Alkydharzen (A), Reaktiwerdünnern (RV) und Pigmenten, falls vorhanden, 65 bis 85 Gew.% beträgt,

vorzugsweise weist die Beschichtungszusammensetzung (B) ferner ein Gewichtsverhältnis der Gesamtmenge an UV-härtbaren Bindemitteln (UV-BM) zu der Gesamtmenge an Alkydharzen (A), (UV-BM:A) von 2,0:1,0 bis 10,0:1,0, stärker bevorzugt von 2,0:1,0 bis 5,0:1,0, noch stärker bevorzugt von3,0:1,0 bis 4,0:1,0, innerhalb der oben genannten Prozentbereiche, auf

In dieser zuletzt genannten bevorzugten Ausführungsvariante müssen sowohl die Prozentbereiche als auch das Verhältnis erfüllt sein. Dies bedeutet, dass für einen bestimmten Anteil an UV-härtbarem Bindemittel (UV-BM), nur noch ein Teilbereich der mittels Prozentangaben definierten Menge für das Alkydharz infrage kommt. Beispielsweise ist bei einem Anteil an UV-härtbarem Bindemittel (UV-BM) von 50 Gew.% bei einem Verhältnis (UV-BM:A), von 2,0:1,0 bis 10,0:1,0 nur noch eine Menge an Alkydharz von 5,0 bis 15 Gew.% möglich.

Verfahren

Die Erfindung betrifft ferner ein Verfahren zur Beschichtung von nicht-grundierten Metallsubstraten (S), enthaltend die folgenden Schritte

> a) Aufbringen der Beschichtungszusammensetzung (B) gemäß der vorliegenden Erfindung direkt auf das nicht-grundierte Metallsubstrat (S),
> b) partielles oder vollständiges UV-Härten der in Schritt a) aufgebrachten Beschichtungszusammensetzung (B);

Das Aufbringen in Schritt a) erfolgt vorzugsweise mittels Druckverfahren, insbesondere bevorzugt mittels Nassoffsetverfahren, indirektem Hochdruck oder direktem Hochdruck.
In der vorliegenden Erfindung bedeutet" UV-Härten" Bestrahlen der Probe mit UV-Strahlung im Wellenlängenbereich von 200 bis 380 nm.
Es wurde überraschenderweise gefunden, dass eine separate Härtung des Alkydharzes nicht erforderlich ist.
In Schritt b) kann die Beschichtung partiell oder vollständig ausgehärtet werden. Eine partielle Aushärtung wird vorzugsweise dann durchgeführt, wenn noch weitere Beschichtungsschichten aufgetragen werden. Partielle Aushärtung bedeutet hier, dass nicht einzelne Flächenausschnitte der Beschichtung gehärtet werden und andere nicht, sondern, dass die Beschichtung über die gesamte Fläche nicht vollständig ausgehärtet wird.
Optional kann das Verfahren zwischen Schritt a) und b) noch folgenden Schritt a1) enthalten

> a1) Aufbringen von einer oder mehreren weiteren Beschichtungszusammensetzungen (WB1, WB2, WB3, ...) nach Aufbringen der Beschichtungszusammensetzung (B) in Schritt a), wobei

die weiteren Beschichtungszusammensetzungen (WB1, WB2, WB3, ...) vorzugsweise Beschichtungszusammensetzungen (B) gemäß der vorliegenden Erfindung sind und die Beschichtungszusammensetzungen (WB1, WB2, WB3, ...) identisch oder verschieden von der in Schritt a) aufgebrachten Beschichtungszusammensetzungen (B) sein können. In diesem Fall werden in Schritt b) die in Schritt a) aufgebrachte Beschichtungszusammensetzung (B) und die in Schritt a1) aufgebrachten weiteren Beschichtungszusammensetzungen (WB1, WB2, WB3, ...) partiell oder vollständig gehärtet.
Das Aufbringen von weiteren Beschichtungszusammensetzungen (WB1, WB2, WB3, ...) erfolgt vorzugsweise mittels Druckverfahren, insbesondere bevorzugt mittels Nassoffsetverfahren, indirektem Hochdruck oder direktem Hochdruck.
Beispielsweise werden im Bereich der Metaldeco bei mehrfarbigen Beschichtungen üblicherweise die einzelnen Farben (z.B. CMYK-Farbdruck) nacheinander aufgetragen und gemeinsam gehärtet. Ein direktes farbiges Bedrucken der Metalloberfläche kann beispielsweise durchgeführt werden, wenn die metallische Oberfläche des zu bedruckenden Metallsubstrats nicht vollständig bedeckt werden soll.
Alternativ kann auch eine Beschichtungszusammensetzung (B) gemäß der vorliegenden Erfindung in Schritt a) aufgetragen werden und partiell oder vollständig in Schritt b) gehärtet werden bevor weitere Beschichtungszusammensetzungen (WB1, WB2, WB3, ...) aufgetragen werden. Diese können dann einzeln oder gemeinsam partiell oder vollständig gehärtet werden.
Normalerweise wird im letzten Härtungsschritt vollständig ausgehärtet. Sollte das Verfahren der vorliegenden Erfindung nur einen Härtungsschritt aufweisen, so wird in diesem Härtungsschritt üblicherweise vollständig ausgehärtet.
In einer bevorzugten Ausführungsform der vorliegenden Erfindung enthält das Verfahren zur Beschichtung von nicht-grundierten Metallsubstraten (S), die folgenden Schritte

> a) Aufbringen der Beschichtungszusammensetzung (B) gemäß der vorliegenden Erfindung direkt auf das nicht-grundierten Metallsubstrat (S), vorzugsweise mittels Druckverfahren, insbesondere bevorzugt mittels Nassoffsetverfahren, indirektem Hochdruck oder direktem Hochdruck;
> b) optional partielles oder vollständiges UV-Härten der in Schritt a) aufgebrachten Beschichtungszusammensetzung (B);
> c) Aufbringen von einer oder mehreren weiteren Beschichtungszusammensetzungen (WB1, WB2, WB3, ...) nach Aufbringen der Beschichtungszusammensetzung (B) in Schritt a) oder auf die in Schritt b), falls vorhanden, partiell oder vollständig gehärtete Beschichtungszusammensetzung (B);
> d) partielles oder vollständiges UV-Härten der in Schritt c) aufgebrachten einer oder mehrerer weiterer Beschichtungszusammensetzungen (WB1, WB2, WB3, ...);
> e) optional Wiederholung der Schritte c) und d)
> f) vollständiges UV-Härten aller aufgetragenen Beschichtungszusammensetzungen, falls nicht bereits in Schritt d) oder e), falls vorhanden, erfolgt.

wobei

die weiteren Beschichtungszusammensetzungen (WB1, WB2, WB3, ...) vorzugsweise Beschichtungszusammensetzungen (B) gemäß der vorliegenden Erfindung sind und die Beschichtungszusammensetzungen (WB1, WB2, WB3, ...) identisch oder verschieden von der in Schritt a) aufgebrachten Beschichtungszusammensetzungen (B) sein können und, sollte Schritt e) vorhanden sein, die in Schritt e) verwendeten weiteren Beschichtungszusammensetzungen (WB1, WB2, WB3, ...) vorzugsweise Beschichtungszusammensetzungen (B) gemäß der vorliegenden Erfindung sind und die weiteren Beschichtungszusammensetzungen (WB1, WB2, WB3, ...) identisch oder verschieden von der in Schritt a) aufgebrachten Beschichtungszusammensetzungen (B) und identisch oder verschieden von den in Schritt c) aufgebrachten weiteren Beschichtungszusammensetzungen (WB1, WB2, WB3, ...) sein können.

Im Folgenden werden bevorzugte Ausführungsformen aller Verfahren gemäß der vorliegenden Erfindung beschrieben, es sei denn, es wird ausdrücklich auf etwas Anderes hingewiesen.

Die Nassschichtdicke aller aufgetragenen Beschichtungsschichten, also z.B. aus der Beschichtungszusammensetzung (B) in Schritt a) und den weiteren

Beschichtungszusammensetzungen (WB1, WB2, WB3, ...) in Schritt c) und optional e), beträgt vorzugsweise jeweils 0,5 $\mu$m bis 5,0 $\mu$m, stärker bevorzugt sind 1,0 $\mu$m bis 3,0 $\mu$m

Vorzugsweise erfolgt die Aushärtung in Schritt b) gemäß aller Ausführungsformen der vorliegenden Erfindung, falls vorhanden, bei einer Strahlendosis von 25 bis 250 W/cm$^2$ für 0,1 bis 2,0 Sekunden, stärker bevorzugt sind eine Strahlendosis von 50 bis 150 W/cm$^2$ für 0,3 bis 1,2 Sekunden.

Vorzugsweise erfolgt die Aushärtung in Schritt d), falls vorhanden, bei einer Strahlendosis von 25 bis 250 W/cm$^2$ für 0,1 bis 2,0 Sekunden, stärker bevorzugt sind eine Strahlendosis von 50 bis 150 W/cm$^2$ für 0,3 bis 1,2 Sekunden.

Vorzugsweise erfolgt die Aushärtung in Schritt f), falls vorhanden, bei einer Strahlendosis von 50 bis 300 W/cm$^2$ für 0,1 bis 2,0 Sekunden, stärker bevorzugt sind eine Strahlendosis von 100 bis 200 W/cm$^2$ für 0,3 bis 1,2 Sekunden.

Üblicherweise ist die Strahlendosis in Schritt f) größer als die Strahlendosis in den Schritten b) und d), falls vorhanden.

Nicht-grundierte Metallsubstrate (S) sind im Stand der Technik bekannt. Insbesondere bevorzugt sind

- Weißbleche (z.B. Feinstbleche),
- Aluminiumbleche oder Eisenbleche welche optional und vorzugsweise beschichtet sind, beispielsweise mit Zinn, Chrom.

Bevorzugte Ausführungsformen der Beschichtungszusammensetzung (B) gemäß der vorliegenden Erfindung sind auch bevorzugte Ausführungsformen des Verfahrens der vorliegenden Erfindung.

Die Erfindung betrifft ferner ein beschichtetes nicht-grundiertes Metallsubstrat (S) erhältlich gemäß dem Verfahren gemäß der vorliegenden Erfindung inklusive aller seiner bevorzugten Ausführungsformen.

Bevorzugte Ausführungsformen der Beschichtungszusammensetzung (B) gemäß der vorliegenden Erfindung und des Verfahrens gemäß der vorliegenden Erfindung sind auch bevorzugte Ausführungsformen des beschichteten nicht-grundierten Metallsubstrats (S) der vorliegenden Erfindung.

Die vorliegende Erfindung ist ferner gerichtet auf die Verwendung der Beschichtungszusammensetzung (B) gemäß der vorliegenden Erfindung zur Beschichtung von nicht-grundierten Metallsubstraten (S), vorzugsweise mittels Druckverfahren, insbesondere bevorzugt mittels Nassoffsetverfahren, indirektem Hochdruck oder direktem Hochdruck.

Bevorzugte Ausführungsformen der Beschichtungszusammensetzung (B) gemäß der vorliegenden Erfindung, des Verfahrens gemäß der vorliegenden Erfindung und des beschichteten nicht-grundierten Metallsubstrats (S) gemäß der vorliegenden Erfindung sind auch bevorzugte Ausführungsformen der Verwendung der vorliegenden Erfindung.

Beispiele:

Messmethoden

Flüchtige Bestandteile:

Der Anteil an flüchtigen Bestandteilen wurde bestimmt, indem ca. 1 g der Beschichtungszusammensetzung auf einen 55 mm Aluminiumteller enthaltend einen Rührspatel eingewogen wurde. Eine gleichmäßige Schicht wurde durch Rühren mittels des Rührspatels hergestellt. Danach wurde der Aluminiumteller in einen Ofen bei 105°C ($\pm$1° C) für 60 Minuten platziert und das Gewicht erneut bestimmt. Aus der Differenz ergaben sich die flüchtigen Anteile.

Farbhaftung:

Die Farbhaftung wurde analog der FINAT FTM 21-Methode (FINAT Technisches Handbuch, 7. Auflage 2005) unter Verwendung eines 3M Scotch 810 Klebefilms ermittelt.

Viskosität Beschichtungszusammensetzung

Die Viskosität wurde gemäß ISO 3219 mittels eines Platte/Kegel Rotationsviskosimeters (Physica MCR 301 der Firma Anton PAAR), unter Verwendung eines Messkegels CP 25-1, bei 23°C bestimmt. Mit Hilfe eines Kunststoffspatels wird die Probe vorsichtig auf die stationäre, ebene Messplatte des Messaufbaus aufgetragen. Es ist darauf zu achten, dass während der Messung der gesamte Kegelspalt mit Messsubstanz ausgefüllt ist. Lufteinschlüsse führen zu abweichenden Ergebnissen. Der Abstand zwischen Kegel und Platte beträgt 51 $\mu$m Im Falle des Alkydharzes betrug die Schergeschwindigkeit (D) 25 s$^{-1}$ und im Falle des UV-härtbaren Bindemittels (UV-BM) war D = 100 s$^{-1}$. Die Beschichtungszusammensetzung (B) wurde bei Schergeschwindigkeiten (D) von 25 s$^{-1}$ und 100 s$^{-1}$ vermessen.

Viskosität (UV-härtende Bindemittel und Alkydharze)

Die Viskosität wurde analog der Bestimmung der Viskosität der

Beschichtungszusammensetzung (s.o.) jedoch mittels eines Platte/Kegel Rotationsviskosimeters (Physica MCR 100 der Firma Anton PAAR) und unter Verwendung eines Messkegels CP 50-1, bei 23°C bestimmt. Der Abstand zwischen Kegel und Platte beträgt 50 $\mu$m.

Tack-Wert

Der Tack-Wert der Beschichtungszusammensetzung wird mittels des Gerätes Inkomat der Fa. Prüfbau bestimmt. Die Messung erfolgt bei einer konstanten Temperatur von 20 °C. Da UV-härtende Druckfarben in der Beschichtungszusammensetzung enthalten sind wurden ester- und ketonbeständige Gummiwalzen verwendet.
Vor Beginn der Messung ist die Walzentemperatur mittels des Anzeigethermometers zu kontrollieren. Die Umlaufgeschwindigkeit beträgt 100m/min, die Messdauer 2 Minuten. 1,0 g Farbe werden gleichmäßig in der Breite auf die Verreiberwalze des Inkomat aufgetragen. Bei langsamer Geschwindigkeit (Waschstufe mit 50 m/min) wird 30 s lang eingefärbt, wobei sich eine gleichmäßige Farbverteilung auf den Walzen ergeben muss. Anschließend wird auf eine Messgeschwindigkeit von 100 m/min umgeschaltet und die an der eingebauten Zeituhr voreingestellte Messzeit von 2 min aktiviert. Der nach dieser Messzeit angezeigte Messwert, in der geräteabhängigen Einheit Inko, wird abgelesen.

Säurezahl

Eine Probe von 1 bis 10 g des Bindemittels wird auf drei Nachkommastellen genau eingewogen und in 80 ml in einer 2:1-Mischung (bezogen auf das Volumen) von Toluol:Ethanol gelöst. Anschließend wurde Phenolphthalein-Indikator zugegeben und mit 0,1 N KOH-Lösung titriert.
Die Säurezahl wurde wie folgt berechnet:

$$\text{Säurezahl} = [(\text{EP1}-\text{EP0}) \cdot 0{,}1 \cdot 56{,}1]/W$$

EP1    Verbrauch an Maßlösung bei Titration der Probe [in ml]
EP0    Verbrauch an Maßlösung bei Leertitration (nur Lösemittel) [in ml]
W    Gewicht der Probe [in g]

Nasschichtdicke

Die Nassschichtdicke wird aus der Dichte der Farbe, der aufgetragenen Farbmenge und der Fläche, auf welche die Farbe aufgetragen wurde, berechnet.

Beispiel 1:

Farbrezeptur:

| | |
|---|---|
| 43,25 g | chlorinierter Polyester (40% in Trimethylolpropan) aufweisend eine dynamische Viskosität bei einer Schergeschwindigkeit (D) von 25 s$^{-1}$ und einer Temperatur von 23°C von 1500 mPa·s und einen Säurewert von nicht mehr als 25 mg KOH/g, Dichte 1,28 g/cm$^3$; |
| 4,5 g | hexafunktionales aromatisches Urethanacrylatoligomer aufweisend ein Molekulargewicht von 1000 g/mol und eine dynamische Viskosität bei einer Schergeschwindigkeit (D) von 25 s$^{-1}$ und einer Temperatur von 23°C von 28500 mPa·s, Dichte 1,22 g/cm$^3$; |
| 9,2 g | Adhesion Promoter RH0066136, erhältlich von Zeller+Gmelin Corporation (USA), enthaltend Alkydharz; |
| 10 g | Photoinitiatormischung enthaltend Alphahydroxyketon, Aminsynergist und Thioxanthonderivat; |
| 18,55 g | Pigmente (farbtonabhängig); |
| 14,5 g | Additive, u.a. enthaltend UV-Stabilisatoren, Dispergieradditive, Haftvermittler, Entschäumer und Entlüfter, Verlaufs- und Netzmittel, Rheologieadditive. |

Unter Verwendung der o.g. Rezeptur und entsprechender Pigmente wurden Druckfarben in den Farbtönen "Deckweiß", "Black", "Cyan", "Magenta" und "Yellow" manuell bei 20°C angerührt bis keine Inhomogenitäten mehr sichtbar waren.

Die Tack-Werte und Viskositäten waren wie folgt:

| | Deckweiß | Black | Cyan | Magenta | Yellow |
|---|---|---|---|---|---|
| Tack [Inko] | 14 | 13 | 14 | 12 | 13 |
| Viskosität D=25 s$^{-1}$ [Pa·s] | 100 | 80 | 80 | 80 | 80 |
| Viskosität D=100 s$^{-1}$ [Pa·s] | 80 | 65 | 70 | 60 | 60 |

Mittels einer Druckmaschine "Metal Star 2" aufweisend sechs Druckwerke (DW) (erhältlich von KBA Metal Print) wurden folgende Schichten im Nassoffsetverfahren aufgetragen. Als Substrat wurde ein spezialverchromtes Feinstblech des Herstellers ThyssenKrupp Rasselstein 10057171, Stärke 0,22 mm verwendet. Die Druckgeschwindigkeit lag während des Versuchs bei 4.000 Tafeln/Stunde. Die UV-Lampe hatte eine Maximalleistung (=100%) von 200 W/cm$^2$

In Druckwerk 1 (DW1) wurde eine erste weiße Farbschicht aufweisend eine Nassschichtdicke von 3,0 μm aufgetragen und anschließend bei 50% UV-Lampenintensität für 1 Sekunde zwischengehärtet.

Auf die so erhaltene Schicht wurde eine zweite weiße Farbschicht aufweisend eine Nassschichtdicke von 3,0 μm aufgetragen und anschließend bei 50% UV-Lampenintensität für 1 Sekunde zwischengehärtet.

Auf die so erhaltene Schicht wurden die Farben Black, Magenta, Cyan und Yellow mittels der Druckwerke DW3 bis DW6 jeweils aufweisend eine Nassschichtdicke von 1,0 μm aufgetragen und anschließend zweimal bei je 60% UV-Lampenintensität für je 1 Sekunde endgehärtet.

Anschließend wurde noch ein Schutzlack (PPG 3573-806) mit einer Nassschichtstärke von 14g/m$^2$ aufgetragen und 10 min bei 180°C ausgehärtet.

Beispiel 2:

Beispiel 1 wurde wiederholt, jedoch wurde ein elektrolytisch verzinntes glänzendes Weißblech des Herstellers ThyssenKrupp Rasselstein 10057558, Stärke 0,22 mm verwendet.

Beispiel 3:

Beispiel 1 wurde wiederholt, jedoch wurde ein mattes elektrolytisch verzinntes Weißblech des Herstellers ThyssenKrupp Rasselstein 10057270, Stärke 0,22 mm verwendet.

Beispiel 4:

Beispiel 1 wurde wiederholt, jedoch wurde ein elektrolytisch hochverzinntes Weißblech des Herstellers ThyssenKrupp Rasselstein 10057261, Stärke 0,22 mm verwendet.

Vergleichsbeispiel 5:

Beispiel 1 wurde wiederholt wobei die entsprechenden Druckfarben des AkzoNobel Systems PACure UV9 verwendet wurden. Hierbei kam es bereits in der Druckmaschine zu einem Abplatzen der Beschichtung, so dass keine weiteren Tests durchgeführt werden konnten.

Die Größe der Testtafeln betrug in jedem Versuch 1039 mm x 894 mm.

Von jedem Beispiel wurden 10 Testtafeln bedruckt und die Farbhaftung visuell bestimmt. Die Ergebnisse sind in folgender Tabelle dargestellt.

|  | Farbhaftung |
|---|---|
| Beispiel 1 | Keinerlei Ablösung |
| Beispiel 2 | Keinerlei Ablösung |
| Beispiel 3 | Keinerlei Ablösung |
| Beispiel 4 | Weniger als 5% Ablösung |
| Vergleichsbeispiel 5 | Abplatzen bereits in der Druckmaschine, daher keine Tests möglich |

Des weiteren wurden 10 Testtafeln des Beispiels 1 aufeinandergestapelt, mit der im obigen Verfahren bedruckten Seite nach oben und anschließend über 24 Stunden mit 1000 kg belastet. Die Tafeln zeigten keinerlei Haftung aneinander und die Farbe riss nicht ab.

**Patentansprüche**

1. Beschichtungszusammensetzung (B), aufweisend eine dynamische Viskosität bei einer Schergeschwindigkeit (D) von 25 $s^{-1}$ von 60 bis 150 Pa·s, enthaltend

   a) ein oder mehrere UV-härtbare Bindemittel (UV-BM),
   b) ein oder mehrere Alkydharze (A),

   wobei

   i) die Gesamtmenge an UV-härtbaren Bindemitteln (UV-BM) und Alkydharzen (A) mindestens 30 Gew.-% basierend auf der Beschichtungszusammensetzung (B) beträgt, und
   ii) die Beschichtungszusammensetzung (B) weniger als 15 Gew.% an flüchtigen Bestandteilen enthält.

2. Beschichtungszusammensetzung (B) gemäß Anspruch 1, wobei der Tack-Wert der Beschichtungszusammensetzung (B) 10 bis 21 Inko beträgt.

3. Beschichtungszusammensetzung (B) gemäß einem der vorangegangenen Ansprüche, wobei das Gewichtsverhältnis der Gesamtmenge an UV-härtbaren Bindemitteln (UV-BM) zu der Gesamtmenge an Alkydharzen (A), (UV-BM:A), 2,0:1,0 bis 10,0:1,0 beträgt.

4. Beschichtungszusammensetzung (B) gemäß einem der vorangegangenen Ansprüche, des Weiteren enthaltend 10 bis 30 Gew.% eines oder mehrerer Reaktivverdünner (RV).

5. Beschichtungszusammensetzung (B) gemäß einem der vorangegangenen Ansprüche, des Weiteren enthaltend 2,0 bis 15 Gew.% an einem oder mehrere Photoinitiatoren (PI).

6. Beschichtungszusammensetzung (B) gemäß einem der vorangegangenen Ansprüche, wobei die Beschichtungszusammensetzung (B) als UV-härtbare Bindemittel (UV-BM)

   (a1) einen mit radikalisch polymerisierbaren C-C-Doppelbindung(en) funktionalisierten Polyester, vorzugsweise chlorierten Polyester; und
   (a2) ein mit radikalisch polymerisierbaren C-C-Doppelbindung(en) funktionalisiertes Polyurethan

enthält.

7. Beschichtungszusammensetzung (B) gemäß einem der vorangegangenen Ansprüche, enthaltend

    a) 20 bis 50 Gew.% an einem oder mehrerer UV-härtbaren Bindemittel (UV-BM),
    b) 2.0 bis 15 Gew.% an einem oder mehrerer Alkydharze (A),
    c) 10 bis 30 Gew.% an einem oder mehrerer Reaktivverdünner (RV);
    d) 2.0 bis 15 Gew.% an einem oder mehreren Photoinitiatoren (PI)
    e) optional bis zu 30 Gew.% an Pigmenten

wobei
die Gesamtmenge an UV-härtbaren Bindemitteln (UV-BM) und Alkydharzen (A) mindestens 30 Gew.-% basierend auf der Beschichtungszusammensetzung (B) beträgt; und
die Gesamtmenge an UV-härtbaren Bindemitteln (UV-BM), Alkydharzen (A), Reaktivverdünnern (RV) und Pigmenten, falls vorhanden, 65 bis 85 Gew.% beträgt.

8. Verfahren zur Beschichtung von nicht-grundierten Metallsubstraten (S), enthaltend die folgenden Schritte

    a) Aufbringen der Beschichtungszusammensetzung (B) gemäß einem der vorangegangenen Ansprüche direkt auf das nicht-grundierte Metallsubstrat (S),
    b) partielles oder vollständiges UV-Härten der in Schritt a) aufgebrachten Beschichtungszusammensetzung (B).

9. Verfahren zur Beschichtung von nicht-grundierten Metallsubstraten (S) gemäß Anspruch 8, des Weiteren enthaltend Schritt a1)

    a1) Aufbringen von einer oder mehreren weiteren Beschichtungszusammensetzungen (WB1, WB2, WB3, ...) nach Aufbringen der Beschichtungszusammensetzung (B) in Schritt a), wobei

die weiteren Beschichtungszusammensetzungen (WB1, WB2, WB3, ...) vorzugsweise Beschichtungszusammensetzungen (B) gemäß einem der vorangegangenen Ansprüche 1 bis 7 sind und die Beschichtungszusammensetzungen (WB1, WB2, WB3, ...) identisch oder verschieden von der in Schritt a) aufgebrachten Beschichtungszusammensetzung (B) sein können.

10. Verfahren zur Beschichtung von nicht-grundierten Metallsubstraten (S) gemäß einem der vorangegangenen Ansprüche 8 oder 9, wobei das Aufbringen in Schritt a) mittels Druckverfahren erfolgt.

11. Verfahren zur Beschichtung von nicht-grundierten Metallsubstraten (S) gemäß Anspruch 10, wobei das Aufbringen in Schritt a) mittels Nassoffsetverfahren, indirektem Hochdruck oder direktem Hochdruck erfolgt.

12. Beschichtetes nicht-grundiertes Metallsubstrat (S) erhältlich durch das Verfahrens gemäß einem der vorangegangenen Ansprüche 8 bis 11.

13. Verwendung der Beschichtungszusammensetzung (B) gemäß eines der vorangegangenen Ansprüche 1 bis 7 zur Beschichtung von nicht-grundierten Metallsubstraten (S).

14. Verwendung gemäß Anspruch 13, wobei die Beschichtung mittels Druckverfahren erfolgt.

15. Verwendung gemäß Anspruch 14, wobei die Beschichtung mittels Nassoffsetverfahren, indirektem Hochdruck oder direktem Hochdruck erfolgt.

Europäisches
Patentamt

European
Patent Office

Office européen
des brevets

## EUROPÄISCHER RECHERCHENBERICHT

**Nummer der Anmeldung**

EP 18 15 6701

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 789 065 A2 (BAYER AG [DE]) 13. August 1997 (1997-08-13) * das ganze Dokument * ----- | 1-15 | INV. C09D167/00 C08L67/08 C08L75/16 |
| X | US 2 705 702 A (LA BERGE ROBERT W) 5. April 1955 (1955-04-05) * Spalte 1, Zeile 15 - Zeile 16 * * Spalte 1, Zeile 73 - Spalte 2, Zeile 3 * ----- | 1-3,12, 13 | |
| X | GB 2 294 938 A (CRAY VALLEY LTD [GB]) 15. Mai 1996 (1996-05-15) * Anspruch 1 * ----- | 1 | |
| X | US 5 780 526 A (MATSUI SAKAE [JP] ET AL) 14. Juli 1998 (1998-07-14) * Zusammenfassung * ----- | 1 | |

**RECHERCHIERTE SACHGEBIETE (IPC)**

C09D
C08L

Der vorliegende Recherchenbericht wurde für alle Patentansprüche erstellt

| Recherchenort | Abschlußdatum der Recherche | Prüfer |
|---|---|---|
| Den Haag | 31. Juli 2018 | Hoffmann, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 6701

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2018

| Im Recherchenbericht angeführtes Patentdokument | Datum der Veröffentlichung | Mitglied(er) der Patentfamilie | Datum der Veröffentlichung |
|---|---|---|---|
| EP 0789065 A2 | 13-08-1997 | CA 2196643 A1<br>DE 19604185 A1<br>EP 0789065 A2<br>JP H09221609 A<br>US 5744248 A | 07-08-1997<br>07-08-1997<br>13-08-1997<br>26-08-1997<br>28-04-1998 |
| US 2705702 A | 05-04-1955 | KEINE | |
| GB 2294938 A | 15-05-1996 | KEINE | |
| US 5780526 A | 14-07-1998 | JP 3673279 B2<br>US 5780526 A<br>WO 9532250 A1 | 20-07-2005<br>14-07-1998<br>30-11-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Advances in Polymer Science. Springer, 1974, vol. 14